(19) **Europäisches Patentamt / European Patent Office / Office européen des brevets**

(11) **EP 4 729 567 A1**

(12) **EUROPEAN PATENT APPLICATION**
published in accordance with Art. 153(4) EPC

(43) Date of publication:
**22.04.2026 Bulletin 2026/17**

(21) Application number: **24823034.4**

(22) Date of filing: **27.02.2024**

(51) International Patent Classification (IPC):
*C08J 5/18* (2006.01)   *C08F 8/12* (2006.01)
*C08F 16/06* (2006.01)   *C08L 29/04* (2006.01)
*G02B 5/30* (2006.01)

(52) Cooperative Patent Classification (CPC):
**C08J 5/18; C08F 8/12; C08F 16/06; C08L 29/04;
G02B 5/30;** C08J 2329/04; C08J 2429/04;
C08L 2203/16; C08L 2205/025; C08L 2205/06

(86) International application number:
**PCT/JP2024/006964**

(87) International publication number:
**WO 2024/257411 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.06.2023 JP 2023097541**

(71) Applicant: **Mitsubishi Chemical Corporation
Tokyo 100-8251 (JP)**

(72) Inventors:
• **YOSHIMOTO, Sae
  Tokyo 100-8251 (JP)**
• **KANETA, Kenji
  Tokyo 100-8251 (JP)**

(74) Representative: **Hoffmann Eitle
Patent- und Rechtsanwälte PartmbB
Arabellastraße 30
81925 München (DE)**

(54) **POLY(VINYL ALCOHOL)-BASED RESIN FILM, OPTICAL FILM, WATER-SOLUBLE FILM, AND POLY(VINYL ALCOHOL)-BASED RESIN COMPOSITION**

(57)     Provided is a polyvinyl alcohol-based resin film that suppresses corrosive deterioration of a dissolution can, an extruder, a die mold, a metal roll, a belt, and the like used in the manufacturing of the polyvinyl alcohol-based resin film, and thereby enables excellent production efficiency and maintenance ease.

The polyvinyl alcohol-based resin film contains a polyvinyl alcohol-based resin (A) and has a percent modern carbon (pMC) value of C14 of from 9 to 50 as measured by the ASTM D6866 (Method B) standard.

**EP 4 729 567 A1**

**Description**

Technical Field

The present disclosure relates to a polyvinyl alcohol-based resin film, an optical film, a water-soluble film, and a polyvinyl alcohol-based resin composition.

Background Art

In the related art, polyvinyl alcohol-based resins have been applied in various fields due to their excellent properties and diverse qualities. Moreover, because of their excellent gas barrier properties, mechanical strength, transparency, glossiness, water solubility, and the like, polyvinyl alcohol-based resins have been used in a wide range of fields, such as in optical film applications, packaging for food and healthcare applications, medical infusion bags, packaging for various chemicals such as liquid detergents and agricultural chemicals, and seed tapes containing seeds.

Films using these polyvinyl alcohol-based resins are manufactured by dissolving a polyvinyl alcohol-based resin in a solvent such as water to prepare a stock solution, and then forming a film through a solution casting method (casting method) using a casting mold such as a metal roll or a belt, and drying the film using a metal heating roll, a floating dryer, or the like.

On the other hand, these stock solutions produced by dissolving a polyvinyl alcohol-based resin in water or the like generally exhibit a property of weak acidity. Therefore, a problem with melt casting and molding of a polyvinyl alcohol-based resin is that metal materials used in a dissolution can, an extruder, a die mold, a metal roll, a belt, or the like, which are used in a molding step, are easily corroded, and in these various devices and equipment, the surfaces of these metal materials are typically plated or the like in order to reduce corrosive deterioration (for example, see Patent Literature 1 to 4).

Citation List

Patent Literature

Patent Literature 1: JP H01-28396 A
Patent Literature 2: JP 2012-21174 A
Patent Literature 3: JP 2014-46672 A
Patent Literature 4: JP 2014-148754 A

Summary

Technical Problem

However, the pH of polyvinyl alcohol-based resins tends to further decrease due to long-term retention under high-temperature conditions during molding, and although corrosive deterioration has been improved to some extent by the above-described plating technique, corrosive deterioration cannot be completely prevented from a long-term perspective, and thus the dissolution can, extruder, die mold, metal roll, belt, and the like will require repairs such as re-plating after use for a certain period of time. The costs and time required for these repairs significantly impact production efficiency, and therefore, a need exists for extending as much as possible the time period until these repairs must be made.

By suppressing a decrease in the pH during molding of the polyvinyl alcohol-based resin serving as a base resin, the time period until the various devices and equipment described above must be repaired can be extended, and thus production efficiency and maintenance ease can be improved.

Therefore, under such circumstances, the present disclosure provides a polyvinyl alcohol-based resin film and a polyvinyl alcohol-based resin composition that suppress corrosive deterioration of a dissolution can, an extruder, a die mold, a metal roll, a belt, and the like used in the manufacturing of the polyvinyl alcohol-based resin film, and thereby enables excellent production efficiency and maintenance ease.

Solution to Problem

The present inventors conducted intensive studies in view of the above circumstances, and as a result, discovered that when a polyvinyl alcohol-based resin film is formed with a percent modern carbon (pMC) value of C14 of from 9 to 50 as measured by the ASTM D6866 (Method B) standard, and the polyvinyl alcohol-based resin film thereof is used, a reduction in the corrosive deterioration of the dissolution can, extruder, die mold, metal roll, belt, and the like can be anticipated due to a suppression in a decrease in the pH of the polyvinyl alcohol-based resin composition during the process of forming the film.

That is, the present disclosure provides the following aspects.

[1] A polyvinyl alcohol-based resin film containing a polyvinyl alcohol-based resin (A),
wherein
the polyvinyl alcohol-based resin film has a percent modern carbon (pMC) value of C14 of from 9 to 50 as measured by the ASTM D6866 (Method B) standard.

[2] The polyvinyl alcohol-based resin film according to [1], wherein the polyvinyl alcohol-based resin (A) has a saponification degree of from 80 to 99.9 mol%.

[3] The polyvinyl alcohol-based resin film according to [1] or [2], wherein the polyvinyl alcohol-based resin (A) has a weight average molecular weight of from 20000 to 150000.

[4] The polyvinyl alcohol-based resin film according to any one of [1] to [3], containing a plasticizer (B).

[5] The polyvinyl alcohol-based resin film according to [4], wherein a content of the plasticizer (B) is from 1 to 45 parts by mass per 100 parts by mass of the polyvinyl alcohol-based resin (A).

[6] The polyvinyl alcohol-based resin film according to any one of [1] to [5], wherein the polyvinyl alcohol-based resin film has a thickness of from 10 to 130 μm.

[7] The polyvinyl alcohol-based resin film according to any one of [1] to [6], wherein the polyvinyl alcohol-based resin film is configured for manufacturing a polarizing film.

[8] An optical film including the polyvinyl alcohol-based resin film according to any one of [1] to [7].

[9] The optical film according to [8], wherein the optical film is a polarizing film.

[10] A water-soluble film including the polyvinyl alcohol-based resin film according to any one of [1] to [6].

[11] A polyvinyl alcohol-based resin composition containing at least a polyvinyl alcohol-based resin (A),
wherein
the polyvinyl alcohol-based resin composition has a pMC value of C14 of from 9 to 50 as measured by the ASTM D6866 (Method B) standard.

[12] The polyvinyl alcohol-based resin composition according to [11], containing a plasticizer (B).

[13] A polyvinyl alcohol-based resin film containing the polyvinyl alcohol-based resin composition according to [11] or [12].

Advantageous Effects of Disclosure

The polyvinyl alcohol-based resin film of the present disclosure excels in suppressing the corrosive deterioration of various devices and equipment such as a dissolution can, an extruder, a die mold, a metal roll, and a belt during film manufacturing, and can thereby extend the time period until the various devices and equipment must be repaired and thus improve production efficiency and maintenance ease.

Description of Embodiments

Hereinafter, the present disclosure will be described in detail. However, the present disclosure is not limited to the examples described below.

In the present specification, the wording "x and/or y (with x and y being any configurations)" means at least one selected from x and y, and includes the three meanings of only x, only y, and both x and y.

In the present specification, unless otherwise specified, the expression "from X to Y" (with X and Y being any numbers) includes the meaning of "X or greater and Y or less" and the meaning of "preferably greater than X" or "preferably smaller than Y".

In addition, when the expression "X or greater" (X being any number) or "Y or less" (Y being any number) is used in the present specification, the expression also includes the meaning of "preferably greater than X" or "preferably less than Y".

In the present specification, with respect to numerical ranges described in steps, the upper limit or the lower limit of a numerical range of a certain step can be optionally combined with the upper limit or the lower limit of a numerical range of another step. In addition, in a numerical range described in the present specification, the upper limit or the lower limit of the numerical range can be replaced with a value presented in the Examples.

In addition, in the present specification, the term "film" means to include a "tape" and a "sheet".

In the present specification, the term "main component" means a component that significantly affects the properties of the target object, and the content of the component in the target object is usually 50 mass% or greater, preferably 55 mass% or greater, more preferably 60 mass% or greater, and still more preferably 70 mass% or greater, and may be 100 mass%.

A polyvinyl alcohol-based resin film according to an embodiment of the present disclosure (hereinafter, may be referred to as "the present polyvinyl alcohol-based resin film") is a polyvinyl alcohol-based resin film having a pMC value of C14 of from 9 to 50 as measured by the ASTM D6866 (Method B) standard.

The upper limit of the pMC value of C14 of the present polyvinyl alcohol-based resin film as measured by the ASTM D6866 (Method B) standard is 50 or less, preferably 48 or less, more preferably 46 or less, still more preferably 45 or less, and particularly preferably 44 or less. Moreover, the lower limit of the pMC value thereof is preferably 9 or greater, more preferably 15 or greater, even more preferably 20 or greater, and particularly preferably 25 or greater.

By setting the pMC value of C14 to within the above range, a decrease in the pH of the polyvinyl alcohol-based resin composition during the film forming process can be suppressed, and corrosive deterioration of a dissolution can, an extruder, a die mold, a metal roll, a belt, or the like is reduced, and thereby the polyvinyl alcohol-based resin film can be preferably used as a base film that can extend the time period until repairs of the various devices and equipment are required.

Although the function of suppressing a decrease in pH is not clear, it is presumed that the pH of the aqueous solution decreases due to the release of acetate groups contained in a portion of the polyvinyl alcohol-based resin.

The percent modern carbon (pMC) of C14 is the relative concentration ratio of C14 in a measurement sample relative to a modern reference standard (NIST4990C) as defined by the biobased concentration test standard ASTM D6866-20.

The present polyvinyl alcohol-based resin film need only contain at least the polyvinyl alcohol-based resin (A), preferably contains a plasticizer (B) as another component, and may contain, as necessary, a surfactant (C), a starch (D), a water-soluble polymer (E) other than (A), and the like.

Polyvinyl Alcohol-Based Resin (A)

The polyvinyl alcohol-based resin (A) used in the present embodiment will be described.

The present polyvinyl alcohol-based resin film must contain at least one "polyvinyl alcohol-based resin (A1) in which all or some of the carbons constituting the polyvinyl alcohol-based resin are derived from biologically-derived ethylene".

In other words, as the polyvinyl alcohol-based resin (A) to be used, a "polyvinyl alcohol-based resin (A1) in which all or some of the carbons constituting the polyvinyl alcohol-based resin are derived from biologically-derived ethylene" may be used alone, or a mixture of a "polyvinyl alcohol-based resin (A1) in which all or some of the carbons constituting the polyvinyl alcohol-based resin are derived from biologically-derived ethylene" and a "polyvinyl alcohol-based resin (A'1) produced only from fossil fuel-derived raw materials" can be used.

The method for producing such "polyvinyl alcohol-based resin (A1) in which all or some of the carbons constituting the polyvinyl alcohol-based resin are derived from biologically-derived ethylene" is not particularly limited, and examples thereof include:

(1) a method of producing the polyvinyl alcohol-based resin (A1) by saponifying only a polyvinyl ester produced by polymerizing only a biovinyl ester monomer which is produced by using bioethylene as a raw material;
(2) a method of producing the polyvinyl alcohol-based resin (A1) by saponifying a polyvinyl ester produced by polymerizing a biovinyl ester monomer which is produced by using a mixture of bioethylene and fossil fuel-derived ethylene as a raw material;
(3) a method of producing the polyvinyl alcohol-based resin (A1) by saponifying a polyvinyl ester produced by copolymerizing a biovinyl ester monomer which is produced by using bioethylene as a raw material and a vinyl ester monomer which is produced by using a fossil fuel-derived ethylene as a raw material;
(4) a method of producing the polyvinyl alcohol-based resin (A1) by saponifying a mixture of a polyvinyl ester produced by polymerizing only a biovinyl ester monomer which is produced by using bioethylene as a raw material and a polyvinyl ester produced by polymerizing only a fossil fuel-derived vinyl ester monomer; and
(5) a method that is a combination of the above methods (2) to (4).

Among these methods, the method (1) or (2) is preferable in that a polyvinyl alcohol-based resin (A1) in which all or some of the carbons constituting the polyvinyl alcohol-based resin are derived from biologically-derived ethylene can be efficiently manufactured.

Examples of the vinyl ester monomer include vinyl formate, vinyl acetate, vinyl propionate, vinyl valerate, vinyl laurate, vinyl stearate, vinyl benzoate, vinyl pivalate, and vinyl versatate, and among these, vinyl acetate is preferable.

The method for manufacturing the vinyl ester monomer is not particularly limited, and for example, the vinyl ester monomer can be produced by reacting ethylene with a compound having a carboxyl group represented by R-COOH. Vinyl acetate can be synthesized as follows. Vinyl acetate can usually be produced by subjecting ethylene, acetic acid, and oxygen to a gas phase reaction in the presence of a catalyst. At this time, vinyl acetate containing a predetermined amount of C14 is produced by using ethylene containing the predetermined amount of C14 or, as the compound having a carboxyl group, acetic acid containing the predetermined amount of C14. Examples of ethylene containing a predetermined amount of C14 include bioethylene.

In the manufacturing of the vinyl ester monomer, it is preferable to use a biologically-derived raw material as a raw material other than ethylene, such as a carboxylic acid, but since the carboxylic acid group is detached from the polymer main chain of the polyvinyl ester during saponification and is usually recovered and reused, even if a raw material derived from a fossil fuel is used, carbon dioxide present in the global environment is not increased, and the raw material thereof does not cause global warming.

The polyvinyl ester is preferably produced using one or more vinyl ester monomers, and is more preferably produced using only one vinyl ester monomer.

The polyvinyl ester may be a copolymer of one or more vinyl ester monomers and another monomer copolymerizable therewith.

Ethylene is preferred as the other monomer copolymerizable with the vinyl ester monomer. That is, the polyvinyl alcohol contained in the polyvinyl alcohol-based resin film of the present disclosure preferably contains an ethylene unit. The content of the ethylene unit is preferably 1 mol% or greater, and more preferably 1.5 mol% or greater, based on the number of moles of all structural units constituting the vinyl ester polymer. The content of the ethylene unit is also preferably less than 15 mol%, and more preferably less than 10 mol%, based on the number of moles of all structural units constituting the vinyl ester polymer. When the content of the ethylene unit is within the above range, in a case in which the polyvinyl alcohol-based resin film of the present disclosure is used as a primary film for manufacturing an optical film, the water resistance and the like can be improved without significantly impairing the optical properties of the polyvinyl alcohol-based resin film. The reason for this is not necessarily clear, but it is presumed that even though the introduction of the ethylene unit into the polymer main chain weakens the hydrophilicity, the volume occupied by the ethylene unit in the crystal is not significantly different from the volume of the vinyl alcohol unit, and thus the crystal structure of the polyvinyl alcohol is not significantly disturbed.

Examples of the other monomer copolymerizable with the vinyl ester monomer include, in addition to ethylene, olefins having from 3 to 30 carbons such as propylene, 1-butene, and isobutene; acrylic acid or salts thereof; acrylates such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid or salts thereof; methacrylates such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamide derivatives such as acrylamide, N-methylacrylamide, N-ethylacrylamide, N,N-dimethylacrylamide, diacetone acrylamide, acrylamido-propanesulfonic acid or salts thereof, acrylamidopropyldimethylamine or salts thereof, and N-methylolacrylamide or derivatives thereof; methacrylamide derivatives such as methacrylamide, N-methylmethacrylamide, N-ethylmethacrylamide, methacrylamido-propanesulfonic acid or salts thereof, methacrylamidopropyldimethylamine or salts thereof, and N-methylolmethacrylamide or derivatives thereof; N-vinylamides such as N-vinylformamide, N-vinylacetamide, and N-vinylpyrrolidone; vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; vinyl cyanides such as acrylonitrile and methacrylonitrile; vinyl halides such as vinyl chloride, vinylidene chloride, vinyl fluoride, and vinylidene fluoride; allyl compounds such as allyl acetate and allyl chloride; maleic acid or a salt, ester, or acid anhydride thereof; itaconic acid or a salt, ester, or acid anhydride thereof; vinylsilyl compounds such as vinyltrimethoxysilane; and isopropenyl acetate. The above vinyl ester-based polymer may have a structural unit derived from one or more of these other monomers.

From viewpoints such as the strength of the polyvinyl alcohol-based resin film to be produced and the optical performance in a case in which the polyvinyl alcohol-based resin film is used as a primary film for manufacturing an optical film, the proportion of the structural unit derived from the other monomer in the polyvinyl ester is preferably 15 mol% or less and more preferably 5 mol% or less, based on the number of moles of all structural units constituting the polyvinyl ester.

As the other monomer copolymerizable with the vinyl ester monomer, a monomer derived from a fossil fuel may be used, or a monomer derived from a plant may be used.

The weight average molecular weight of the polyvinyl alcohol-based resin (A) is preferably from 20000 to 150000, particularly preferably from 60000 to 130000, and further preferably from 70000 to 120000. If the weight average molecular weight is too small, the mechanical strength tends to decrease, and if the weight average molecular weight is too large, productivity tends to decrease. In addition, when the weight average molecular weight is too small, achieving sufficient optical performance tends to be difficult in a case in which the polyvinyl alcohol-based resin is used as an optical film, and when the weight average molecular weight is too large, stretching tends to become difficult in a case in which a polarizing film is manufactured using the polyvinyl alcohol-based resin film. The weight average molecular weight of the polyvinyl alcohol-based resin is the weight average molecular weight measured by the gel permeation chromatography (GPC) method.

The degree of dispersion (weight average molecular weight / number average molecular weight) of the polyvinyl alcohol-based resin (A) is preferably from 1.95 to 3.50, particularly preferably from 1.96 to 2.50, and further preferably from 1.97 to 2.10.

If the degree of dispersion is too small, stretching tends to be difficult when a polarizing film is manufactured using the polyvinyl alcohol-based resin film, and if the degree of dispersion is too large, achieving sufficient optical performance tends to be difficult when the polyvinyl alcohol-based resin is used as an optical film.

The weight average molecular weight and the number average molecular weight when measuring the degree of dispersion of the polyvinyl alcohol-based resin are values measured by the GPC method.

Usually, the average saponification degree of the polyvinyl alcohol-based resin (A) is preferably 80 mol% or greater, more preferably 87 mol% or greater, particularly preferably 99 mol% or greater, further preferably 99.5 mol% or greater, and especially preferably 99.8 mol% or greater. If the average saponification degree is too small, sufficient optical performance tends not to be achieved when the polyvinyl alcohol-based resin film is used as a polarizing film.

The average saponification degree in the present specification is measured in accordance with JIS K 6726.

The upper limit of the pMC value of C14 of the polyvinyl alcohol-based resin (A) as measured by the ASTM D6866 (Method B) standard is preferably 48 or less, more preferably 45 or less, still more preferably 43 or less, and particularly preferably 41 or less. Moreover, the lower limit thereof is preferably 2 or greater, more preferably 5 or greater, even more preferably 10 or greater, and particularly preferably 15 or greater.

By setting the pMC value thereof to within the above range, a decrease in the pH of the polyvinyl alcohol-based resin composition during the film forming process can be suppressed, and corrosive deterioration of the dissolution can, extruder, die mold, metal roll, belt, or the like is reduced, and thereby the polyvinyl alcohol-based resin film can be preferably used as a base film that can extend the time period until repairs of the various devices and equipment are required.

As the polyvinyl alcohol-based resin (A), one type of polyvinyl alcohol may be used, or two or more types of polyvinyl alcohols having different polymerization degrees, saponification degrees, modification degrees, or the like may be blended and used.

Plasticizer (B)

Examples of the plasticizer (B) include glycerins such as glycerin, diglycerin, and triglycerin, alkylene glycols such as triethylene glycol, polyethylene glycol, polypropylene glycol, dipropylene glycol, and propylene glycol, and sugar alcohols such as trimethylolpropane, sorbitol, xylitol, and maltitol. One of these may be used alone or two or more of these may be used in combination. Among these plasticizers, glycerin, polyethylene glycol, and diglycerin are preferably used because they are easily procured and can provide a plasticizing effect even in a small amount.

The content of the plasticizer (B) per 100 parts by mass of the polyvinyl alcohol-based resin (A) is preferably from 1 to 45 parts by mass, particularly preferably from 3 to 30 parts by mass, and further preferably from 5 to 25 parts by mass. When the content of the plasticizer (B) is too small, the stretchability when a polarizing film is produced tends to decrease, and when the content is too large, the strength of the polyvinyl alcohol-based resin film that is produced tends to decrease.

Surfactant (C)

The surfactant (C) generally functions to suppress the smoothness of the film surface and the adhesion of the films to each other when the films are wound into a roll shape, and for example, a nonionic surfactant, an anionic surfactant, and a cationic surfactant can be used alone or in combination of two or more types thereof.

Examples of the nonionic surfactant include polyoxyethylene alkyl ethers such as polyoxyethylene hexyl ether, polyoxyethylene heptyl ether, polyoxyethylene octyl ether, polyoxyethylene nonyl ether, polyoxyethylene decyl ether, polyoxyethylene dodecyl ether, polyoxyethylene tetradecyl ether, polyoxyethylene hexadecyl ether, polyoxyethylene octadecyl ether, polyoxyethylene eicosyl ether, polyoxyethylene oleyl ether, polyoxyethylene lauryl ether, coconut oil reduced alcohol ethylene oxide adduct, and beef tallow reduced alcohol ethylene oxide adduct; higher fatty acid alkanolamides such as caproic acid mono- or di- ethanolamide, caprylic acid mono- or di- ethanolamide, capric acid mono- or di- ethanolamide, lauric acid mono- or diethanolamide, palmitic acid mono- or di- ethanolamide, stearic acid mono- or di- ethanolamide, oleic acid mono- or di- ethanolamide, coconut oil fatty acid mono- or di- ethanolamide, or propanolamides and butanolamides in place of these ethanolamides; higher fatty acid amides such as caproic acid amide, caprylic acid amide, capric acid amide, lauric acid amide, palmitic acid amide, stearic acid amide, and oleic acid amide; polyoxyethylene alkylamines such as hydroxyethyl laurylamine, polyoxyethylene hexylamine, polyoxyethylene heptylamine, polyoxyethylene octylamine, polyoxyethylene nonylamine, polyoxyethylene decylamine, polyoxyethylene dodecylamine, polyoxyethylene tetradecylamine, polyoxyethylene hexadecylamine, polyoxyethylene octadecylamine, polyoxyethylene oleylamine, polyoxyethylene laurylamine, and polyoxyethylene eicosylamine; polyoxyethylene higher fatty acid amides such as polyoxyethylene caproic acid amide, polyoxyethylene caprylic acid amide, polyoxyethylene capric acid amide, polyoxyethylene lauric acid amide, polyoxyethylene palmitic acid amide, polyoxyethylene stearic acid amide, and polyoxyethylene oleic acid amide; amine oxides such as lauryl dimethyl amine oxide, stearyl dimethyl amine oxide, and dihydroxyethyl lauryl amine oxide; and fluoroalkyl acids such as perfluorooctanoic acid.

Examples of the anionic surfactant include, as sulfate forms, alkyl sulfates such as sodium hexyl sulfate, sodium heptyl sulfate, sodium octyl sulfate, sodium nonyl sulfate, sodium decyl sulfate, sodium dodecyl sulfate, sodium tetradecyl sulfate, sodium hexadecyl sulfate, sodium octadecyl sulfate, sodium eicosyl sulfate, or potassium salts, calcium salts, and ammonium salts thereof; polyoxyethylene alkyl ether sulfate salts such as sodium polyoxyethylene hexyl ether sulfate, sodium polyoxyethylene heptyl ether sulfate, sodium polyoxyethylene octyl ether sulfate, sodium polyoxyethylene nonyl ether sulfate, sodium polyoxyethylene decyl ether sulfate, sodium polyoxyethylene dodecyl ether sulfate, sodium polyoxyethylene tetradecyl ether sulfate, sodium polyoxymethylene hexadecyl ether sulfate, sodium polyoxymethylene octadecyl ether sulfate, sodium polyoxymethylene eicosyl ether sulfate, or potassium salts and ammonium salts thereof; polyoxyethylene alkyl phenyl ether sulfates such as sodium polyoxyethylene hexylphenyl ether sulfate, sodium polyoxyethylene heptylphenyl ether sulfate, sodium polyoxyethylene octylphenyl ether sulfate, sodium polyoxyethylene nonylphenyl ether sulfate, sodium polyoxyethylene decylphenyl ether sulfate, sodium polyoxyethylene dodecylphenyl ether sulfate, sodium polyoxyethylene tetradecylphenyl ether sulfate, sodium polyoxyethylene hexadecylphenyl ether sulfate, sodium polyoxyethylene octadecylphenyl ether sulfate, sodium polyoxyethylene eicosyl phenyl ether sulfate, or potassium salts and ammonium salts thereof; higher fatty acid alkanolamide sulfates such as caproic acid ethanolamide sodium sulfate, caprylic acid ethanolamide sodium sulfate, capric acid ethanolamide sodium sulfate, lauric acid ethanolamide sodium sulfate, palmitic acid ethanolamide sodium sulfate, stearic acid ethanolamide sodium sulfate, oleic acid ethanolamide sodium sulfate, and potassium salts thereof, and also propanolamides and butanolamides in place of these ethanolamides; and sulfated oils, higher alcohol ethoxysulfates, and monoglysulfates. In addition to the above sulfate forms, other examples of the anionic surfactant include fatty acid soaps, N-acylamino acids and salts thereof, carboxylate forms such as polyoxyethylene alkyl carboxylates and acylated peptide, sulfonate forms such as alkyl sulfonates, alkylbenzene sulfonates, alkylnaphthalene sulfonates, formalin polycondensates of naphthalene sulfonates, formalin condensates of melamine sulfonates, dialkyl sulfosuccinates, alkyl sulfosuccinate disalts, polyoxyethylene alkyl sulfo-succinate disalts, alkyl sulfoacetates, $\alpha$-olefin sulfonates, N-acyl methyl taurine salts, and dimethyl-5-sulfoisophthalate sodium salts, and phosphate forms such as polyoxyethylene alkyl ether phosphates, polyoxyethylene alkylphenyl ether phosphates, and alkyl phosphates.

Examples of the above cationic surfactant include laurylamine hydrochloride, lauryl trimethyl ammonium chloride, and lauryl pyridinium chloride.

Among these surfactants, nonionic surfactants are preferred, higher fatty acid alkanolamides are particularly preferred, lauric acid mono- or di- ethanolamide, palmitic acid mono- or di- ethanolamide, stearic acid mono- or di-ethanolamide, and oleic acid mono- or diethanolamide are further preferred, lauric acid mono- or diethanolamide is particularly preferred, and lauric acid diethanolamide is even more preferred.

A single type of surfactant (C) may be used alone, or two or more types may be used in combination, and use of an anionic surfactant and a nonionic surfactant in combination is preferable from the viewpoint of film transparency.

The content of the surfactant (C) per 100 parts by mass of the polyvinyl alcohol-based resin (A) is preferably from 0.01 to 1 parts by mass, particularly preferably from 0.02 to 0.5 parts by mass, and further preferably from 0.03 to 0.2 parts by mass. If the content of the surfactant (C) is too small, the blocking prevention effect tends to be difficult to achieve, and if the content is too large, the transparency of the film tends to decrease.

In addition, in a case in which the anionic surfactant and the nonionic surfactant are used in combination, per 100 parts by mass of the polyvinyl alcohol-based resin (A), the content of the anionic surfactant is preferably from 0.01 to 1 parts by mass, particularly preferably from 0.02 to 0.2 parts by mass, and more preferably from 0.03 to 0.1 parts by mass, and the content of the nonionic surfactant is preferably from 0.01 to 1 parts by mass, particularly preferably from 0.02 to 0.2 parts by mass, and more preferably from 0.03 to 0.1 parts by mass. If the content of the anionic surfactant is too small, the dispersibility of a dye during production of a polarizing film tends to decrease, resulting in an increase in dyeing spots, and if the content of the anionic surfactant is too large, foaming during dissolution of the polyvinyl alcohol-based resin tends to be intense and air bubbles tend to be easily mixed in the film, making it impossible to use the film as an optical film. Moreover, if the content of the nonionic surfactant is too small, it becomes difficult to achieve the blocking prevention effect, and if the content of the nonionic surfactant is too large, the film transparency and planar smoothness tend to decrease.

Starch (D)

Examples of the starch (D) include raw starches (such as corn starch, potato starch, sweet potato starch, wheat starch, cassava starch, sago starch, tapioca starch, sorghum starch, rice starch, bean starch, kudzu starch, bracken starch, lotus starch, and water chestnut starch), physically modified starches (such as $\alpha$-starch, fractionated amylose, and moist heat treated starch), enzymatically modified starches (such as hydrolyzed dextrin, enzymatically decomposed dextrin, and amylose), chemically degraded starches (such as acid-treated starch, hypochlorite oxidized starch, and dialdehyde starch), and chemically modified starch derivatives (such as esterified starch, etherified starch, cationized starch, and crosslinked starch). Among these, raw starches, and particularly corn starch or rice starch, are preferably used from the viewpoint of procurement ease and being economical. One of these starches may be used alone, or two or more thereof may be used in combination.

The content of the starch (D) per 100 parts by mass of the polyvinyl alcohol-based resin (A) is preferably 15 parts by mass or less, and more preferably 10 parts by mass or less. When the amount of the starch (D) is greater than 15 parts by mass, the ability to pass through a process when manufacturing the polyvinyl alcohol-based resin film may worsen.

Water-Soluble Polymer (E) Other than (A)

Examples of the water-soluble polymer (E) other than the polyvinyl alcohol-based resin (A) include dextrin, gelatin, glue, casein, shellac, gum arabic, polyacrylic acid amide, sodium polyacrylate, polyvinyl methyl ether, a copolymer of methyl vinyl ether and maleic anhydride, a copolymer of vinyl acetate and itaconic acid, polyvinylpyrrolidone, cellulose, acetyl cellulose, acetyl butyl cellulose, carboxymethyl cellulose, methyl cellulose, ethyl cellulose, hydroxyethyl cellulose, and sodium alginate. One of these water-soluble polymers (E) may be used alone or two or more thereof may be used in combination.

The content of the water-soluble polymer (E) per 100 parts by mass of the polyvinyl alcohol-based resin (A) is preferably 15 parts by mass or less, and more preferably 10 parts by mass or less. When the content of the water-soluble polymer (E) is greater than 15 parts by mass, the physical properties of the polyvinyl alcohol-based resin film may be impaired.

Other Components

In addition to the plasticizer, surfactant, starch, and water-soluble polymer other than the polyvinyl alcohol-based resin (A), the present polyvinyl alcohol-based resin film may also contain other components within a range that does not impair the effects of the present disclosure, such as moisture, an antioxidant, an ultraviolet absorber, a lubricant, a crosslinking agent, a colorant, a filler, a preservative, an antifungal agent, and other polymer compounds. One of these other components may be used alone, or two or more thereof may be used in combination.

The polyvinyl alcohol-based resin film is preferably a film produced using a polyvinyl alcohol-based resin composition.

The upper limit of the pMC value of C14 of such a polyvinyl alcohol-based resin composition as measured by the ASTM D6866 (Method B) standard must be 50 or less, preferably 48 or less, more preferably 45 or less, still more preferably 40 or less, and particularly preferably 35 or less. Moreover, the lower limit of the pMC value thereof is preferably 9 or greater, more preferably 15 or greater, even more preferably 20 or greater, and particularly preferably 25 or greater.

When the pMC value of C14 is set to within the above range, the polyvinyl alcohol-based resin composition can be used as a base resin that suppresses a decrease in the pH of the polyvinyl alcohol-based resin composition during the film forming process, and corrosive deterioration of a dissolution can, an extruder, a die mold, a metal roll, a belt, or the like is reduced, and thereby the time period until repairs of the various devices and equipment are required can be extended.

Method for Manufacturing Polyvinyl Alcohol-Based Resin Film

The method for manufacturing the present polyvinyl alcohol-based resin film uses a film-forming stock solution (aqueous solution of the polyvinyl alcohol-based resin composition) produced by adding a solvent, additives, and the like to the polyvinyl alcohol-based resin (A) and homogenizing the mixture thereof. The production method can be any method such as a casting film formation method, a wet film formation method (discharge into a poor solvent), a dry-wet film formation method, a gel film formation method (a method in which the film-forming stock solution is cooled and gelled, and then the solvent is extracted and removed to produce a polyvinyl alcohol-based resin film), or a method of forming a film using a combination of these methods, a melt extrusion film formation method of producing the film-forming stock solution and using an extruder or the like to extrude the resulting film-forming stock solution from a T-die or the like and thereby form a film, or an inflation molding method. Among these, the casting film formation method and the melt extrusion film formation method are preferable because a homogeneous film can be produced with high productivity. The casting film formation method and the melt extrusion film formation method for forming the polyvinyl alcohol-based resin film will be described below.

When the present polyvinyl alcohol-based resin film is formed by the casting film formation method or the melt extrusion film formation method, the above-described film-forming stock solution is subjected to a defoaming treatment, cast in a film shape on a support such as a metal roll or a metal belt, and heated to remove the solvent, and thereby the stock solution is solidified to form a film. Examples of the defoaming method include static defoaming and defoaming using a multi-screw extruder having a vent. As the multi-screw extruder having a vent, a twin screw extruder having a vent is usually used. The solidified film is removed from the support, and as necessary, is dried by a drying roller, a drying furnace, or the like, after which the film is further heat-treated as necessary, and then wound, whereby a long roll-shaped polyvinyl alcohol-based resin film can be produced.

The resin concentration in the film-forming stock solution (the concentration of nonvolatile components, such as the polyvinyl alcohol-based resin, that are not removed by volatilization or evaporation during film formation or the like) is preferably from 10 to 60 mass%, particularly preferably from 12 to 55 mass%, and further preferably from 20 to 50 mass%. When the resin concentration of the aqueous solution thereof is too low, the production capacity tends to decrease due to an increase in the drying load, and when the resin concentration is too high, the viscosity tends to become too high, making it difficult to achieve uniform dissolution.

Here, the "resin concentration of the film-forming stock solution" in the present specification refers to the volatile content percentage determined by the following equation.

Resin concentration (mass%) of film-forming stock solution = (Wb/Wa) $\times$ 100

(In this equation, Wa represents the mass (g) of the film-forming stock solution, and Wb represents the mass (g) when the film-forming stock solution of the mass Wa (g) is dried in an electric dryer at 105°C for 16 hours.)

The method for preparing the film-forming stock solution is not particularly limited, and examples thereof include a method of dissolving the polyvinyl alcohol-based resin (A) and additives such as the plasticizer (B) and the surfactant (C) in a dissolution tank or the like, and a method of melt-kneading a polyvinyl alcohol in a hydrous state together with the plasticizer (B), the surfactant (C), and the like when melt-kneading the polyvinyl alcohol using a single-screw extruder or a twin-screw extruder.

When the polyvinyl alcohol-based resin film is formed by the casting film formation method or the melt extrusion film formation method, the above-described film-forming stock solution is cast in a film shape from a film discharge device onto a support such as a metal roll or a metal belt, and heated to remove the solvent, and thereby the stock solution is solidified to form a film.

The surface temperature of the support on which the film-forming stock solution is cast is preferably 50°C or higher, more preferably 60°C or higher, and even more preferably 65°C or higher. The surface temperature of the support on which the film-forming stock solution is cast is also preferably 110°C or lower, more preferably 100°C or lower, and even more preferably 95°C or lower. If the surface temperature thereof is too low, the removability of the film produced by film formation from the casting mold tends to decrease, and if the surface temperature is too high, foaming tends to occur.

The drying rate may be adjusted by uniformly blowing hot air at a wind speed of from 1 to 10 m/sec onto the entire region of the non-contact surface side of the polyvinyl alcohol film while simultaneously heating the polyvinyl alcohol-based resin film on the support. From viewpoints such as drying efficiency and drying uniformity, the temperature of the hot air blown onto the non-contact surface side is preferably 50°C or higher, and more preferably 70°C or higher. Moreover, from the viewpoints such as drying efficiency and drying uniformity, the temperature of the hot air blown onto the non-contact surface side is also preferably 150°C or less, and more preferably 120°C or less.

The polyvinyl alcohol-based resin film detached from the support is preferably dried on the support to a volatile content of from 5 to 50 mass%, and then detached and further dried as necessary. The drying method is not particularly limited, and examples thereof include use of a drying furnace or a method of bringing the coating film into contact with a drying roller. When drying is carried out using a plurality of drying rollers, it is preferable to alternately bring one surface of the film and then the other surface of the film into contact with the drying rollers in order to make both surfaces uniform. The number of drying rollers is preferably three or more, more preferably four or more, and still more preferably five or more. The number of drying rollers is also preferably 30 or less. When drying rollers are used, the time of contact between each drying roller and the film is preferably from 1 to 60 seconds, particularly preferably from 2 to 30 seconds, further preferably from 3 to 20 seconds, and especially preferably from 4 to 10 seconds. When the contact time is too short, drying tends to be insufficient, and when the contact time is too long, the equipment load tends to increase.

In the present embodiment, the temperature of all drying furnaces and drying rollers to be used is preferably from 40 to 150°C, particularly preferably from 50 to 140°C, further preferably from 60 to 130°C, and especially preferably from 70 to 120°C.

When the temperature of the drying furnaces and drying rollers is too low, the drying tends to be insufficient, and when the temperature is too high, crystallization of the polyvinyl alcohol-based resin proceeds, and the film tends to be too hard.

The dried polyvinyl alcohol-based resin film may be further subjected to a heat treatment as necessary for the purpose of adjusting physical properties such as strength and water solubility. In the present disclosure, the heat treatment is preferably carried out from both surfaces of the film in order to achieve a uniformly dried state on both surfaces of the film. Examples of the heat treatment method include a method of blowing hot air onto both surfaces of the film using a floating dryer and a method of irradiating both surfaces of the film with near-infrared rays using an infrared lamp.

The heat treatment temperature is preferably from 50 to 150°C, and particularly preferably from 70 to 120°C. The heat treatment time is not particularly limited, but is preferably from 10 to 100 seconds and particularly preferably from 20 to 80 seconds when a floating dryer is used.

As necessary, the polyvinyl alcohol-based resin film thus manufactured is further subjected to a humidity conditioning treatment, cutting of both ends (edges) of the film, and the like, and is wound around a cylindrical core in a roll shape and packaged in a moistureproof manner to obtain a product.

The volatile content of the polyvinyl alcohol-based resin film ultimately produced by the above-described series of treatments is not necessarily limited. However, the volatile content of the polyvinyl alcohol-based resin film is preferably 1 mass% or greater, and more preferably 2 mass% or greater. The volatile content of the polyvinyl alcohol-based resin film is also preferably 10 mass% or less, and more preferably 5 mass% or less.

From the viewpoint of manufacturing efficiency, the length of the polyvinyl alcohol-based resin film of the present disclosure thus produced is preferably 0.5 km or longer, and more preferably 1 km or longer, and from the viewpoint of transportation weight, the length thereof is particularly preferably from 5 to 50 km. If the length is too short, switching the film tends to be time consuming, and if the length is too long, excessive weight and appearance defects due to winding tightness tend to occur.

The width of the present polyvinyl alcohol-based resin film is appropriately selected according to the application and the like, but is preferably from 300 to 8000 mm, particularly preferably from 500 to 7000 mm, and further preferably from 600 to 6000 mm. If the width is too narrow, the production efficiency tends to decrease, and if the width is too wide, controlling the slack and film thickness tends to be difficult.

The thickness of the present polyvinyl alcohol-based resin film is appropriately selected according to the application and the like, but is preferably from 10 to 130 $\mu$m, particularly preferably from 15 to 110 $\mu$m, and further preferably from 15 to 60 $\mu$m. If the thickness is too small, the mechanical strength of the film tends to decrease, and if the thickness is too large, the film forming efficiency tends to decrease.

When subjected to the following test for measuring differences in the pH value, the composition used for producing the present polyvinyl alcohol-based resin film preferably has a difference in pH values of 0.28 or less, more preferably 0.26 or less, and still more preferably 0.25 or less. The lower limit of the pH difference is not particularly specified, but a value closer to zero is preferable, and therefore the lower limit thereof is preferably 0 or greater. By setting the difference in pH values as described above, a reduction in corrosive deterioration of the dissolution can, extruder, die mold, metal roll, belt, and the like used in manufacturing can be anticipated.

Method for Measuring Difference in pH Values

A 19% polyvinyl alcohol-based resin composition (X) containing 12 parts by mass of glycerin per 100 parts by mass of a polyvinyl alcohol-based resin is prepared. A polyvinyl alcohol-based resin composition (X1) is then prepared by further diluting the polyvinyl alcohol-based resin composition (X) to 4% with ion-exchanged water. A polyvinyl alcohol-based resin composition (X2) is also prepared by maintaining the polyvinyl alcohol-based resin composition (X) at 90°C for one week and then diluting to 4% with ion-exchanged water.

The pH values of the compositions (X1) and (X2) are measured using a pH meter (Castani-ACT, D-21, available from Horiba, Ltd.) in accordance with JIS Z 8802, and the obtained pH values are defined as a pH(X1) and a pH(X2), respectively. The temperature of the liquid at this time is 25°C. The value obtained by subtracting the pH(X2) from the pH(X1) (that is, pH(X1) - pH(X2)) is defined as the difference in the pH values.

The present polyvinyl alcohol-based resin film thus produced can suppress the corrosion of a dissolution can, an extruder, a die mold, a metal roll, a belt, and the like used in the manufacturing, and can be produced as a polyvinyl alcohol-based resin film having excellent maintenance ease and stable quality, and thus the present polyvinyl alcohol-based resin film is useful in polarizing film applications (such as liquid crystal televisions, smartphones, tablets, personal computers, projectors, and in-vehicle panels) and in water-soluble film applications (such as unit packaging applications of chemicals such as agricultural chemicals and detergents, (water pressure) transfer films, sanitary products such as napkins and disposable diapers, waste disposal products such as ostomy bags, medical products such as blood-absorbing sheets, and temporary substrates such as seedling sheets, seed tapes, and embroidery base fabrics).

A method for manufacturing a polarizing film according to an embodiment of the present disclosure (hereinafter, may be referred to as the "present polarizing film") will be described below.

The present polarizing film is manufactured by unwinding the polyvinyl alcohol-based resin film from a roll, transferring the film in the horizontal direction, and subjecting the film to steps such as swelling, dyeing, crosslinking, stretching, washing, and drying.

The swelling step is carried out before the dyeing step. The swelling step can clean the surface of the polyvinyl alcohol-based resin film of stains, and also has an effect of preventing uneven dyeing and the like by swelling the polyvinyl alcohol-based resin film. Water is usually used as the treatment liquid in the swelling step. As long as the main component of the treatment liquid is water, the treatment liquid may contain a small amount of an iodide compound, an additive such as a surfactant, an alcohol, or the like. The temperature of the swelling bath is usually from around 10°C to around 45°C, and the immersion time in the swelling bath is usually from around 0.1 minutes to around 10 minutes.

The dyeing step is carried out by contacting the film with a liquid containing iodine or a dichroic dye. Usually, an aqueous solution of iodine-potassium iodide is used, and the concentration of iodine is usually from 0.1 to 2 g/L, and the concentration of potassium iodide is usually from 1 to 100 g/L. A practical dyeing time is usually from around 30 seconds to around 500 seconds. The temperature of the treatment bath is preferably from 5 to 50°C. The aqueous solution may contain, in addition to the water solvent, a small amount of an organic solvent that is miscible with the water.

The crosslinking step is carried out using a boron compound such as boric acid or borax. The boron compound is used in the form of an aqueous solution or a water-organic solvent mixed solution, and usually at a concentration of from around 10 g/L to around 100 g/L, and potassium iodide preferably coexists in the solution from the viewpoint of stabilizing the polarization performance.

The temperature during the treatment is usually from around 30°C to around 70°C, the treatment time is preferably from around 0.1 minutes to around 20 minutes, and a stretching operation may be carried out during the treatment as necessary.

In the stretching step, the stretching ratio in one axial direction is preferably from 3 to 10 times, and is particularly preferably from 3.5 to 6 times. In this case, slight stretching (stretching to the extent that shrinkage in the width direction is prevented, or stretching greater than this) may also be carried out in a direction perpendicular to the stretching direction. The temperature during stretching is preferably from 30 to 170°C. Furthermore, the final stretching ratio may be set to within the above range, and the stretching operation may be carried out not only in one stage, but also in any range of stages of the manufacturing process.

The washing step is carried out by, for example, immersing the polyvinyl alcohol-based resin film in water or an aqueous solution of an iodide such as potassium iodide, and precipitates generated on the surface of the film can be removed. When an aqueous solution of potassium iodide is used, the potassium iodide concentration may be from about 1 g/L to about 80 g/L. The temperature during the washing treatment is usually from 5 to 50°C, and preferably from 10 to 45°C. The treatment time is usually from 1 to 300 seconds, and preferably from 10 to 240 seconds. Note that washing with water and washing with the potassium iodide aqueous solution may be combined and implemented, as appropriate.

The drying step may usually be carried out in air at a temperature of from 40 to 80°C for a time of from 1 to 10 minutes.

The degree of polarization of the polarizing film is preferably 99.8% or greater, and particularly preferably 99.9% or greater. When the degree of polarization is too low, ensuring contrast in a liquid crystal display tends to be difficult.

The degree of polarization is generally calculated according to the following equation using a light transmittance (H11) measured at a wavelength $\lambda$ in a state in which two polarizing films are overlapped so that the alignment directions thereof are the same direction, and a light transmittance (H1) measured at the wavelength $\lambda$ in a state in which the two polarizing films are overlapped so that the alignment directions thereof are directions that are orthogonal to each other.

$$[(H11 - H1)/(H11 + H1)]^{1/2}$$

Further, the single unit transmittance of the present polarizing film is preferably 42% or greater, and particularly preferably 43% or greater. If the single unit transmittance is too low, the liquid crystal display tends to be unable to achieve a high level of brightness.

The single unit transmittance is a value obtained by measuring the light transmittance of the polarizing film alone using a spectrophotometer.

The present polarizing film is thus produced and is suitable for manufacturing a polarizing plate having minimal unevenness in the degree of polarization.

The resulting polarizing film can be used as a polarizing plate by laminating and bonding an optically isotropic polymer film or sheet as a protective film on one or both sides of the polarizing film. Examples of the protective film include films or sheets of cellulose triacetate, cellulose diacetate, polycarbonate, polymethyl methacrylate, crosslinked methacrylate-based resins, cycloolefin polymers, cycloolefin copolymers, polystyrene, polyether sulfone, polyarylene esters, poly-4-methylpentene, and polyphenylene oxide.

In addition, for the purpose of producing a thinner polarizing film, a curable resin such as a urethane-based resin, an acrylic resin, or a urea resin may be applied to one or both sides of the polarizing film instead of the protective film, and then cured and laminated.

The polarizing film produced from the present polyvinyl alcohol-based resin film has no color unevenness and is excellent in in-plane uniformity of the polarization performance, and thus is preferably used, for example, in liquid crystal display devices such as portable information terminals, personal computers, televisions, projectors, signage, electronic desktop calculators, electronic clocks, word processors, electronic paper, game machines, video devices, cameras, photo albums, thermometers, audio devices, and instruments for automobiles and machines, and also in sunglasses, anti-glare glasses, stereoscopic glasses, wearable displays, antireflection layers for display elements (CRT, LCD, organic EL, electronic paper, and the like), optical communication devices, medical devices, building materials, and toys.

Examples

Hereinafter, the present disclosure will be more specifically described with reference to examples below, but the present disclosure is not limited to the following examples as long as a departure from the gist of the present disclosure does not occur.
In the examples, units of "parts" and "%" are based on mass.

Measurement Conditions

GPC Measurements of Polyvinyl Alcohol-Based Resin

A chromatogram was obtained by carrying out measurements under the following measurement conditions using gel permeation chromatography (GPC). Using a calibration curve obtained by measuring standard polyethylene oxide and polyethylene glycol (PEO/PEG), the elution time at this time was converted into a molecular weight, and the weight average molecular weight of the polyvinyl alcohol-based resin in terms of the standard sample (PEO/PEG) was calculated.

GPC Measurement Conditions

- Detector: RI, Shodex RI-501
- Column: The TSKgel $\alpha$-M column (13 $\mu$m, 7.8 mm I.D. $\times$ 30 cm) available from Tosoh Corporation was used.
- Mobile phase: 0.2M $NaNO_3$ aqueous solution
- Mobile phase flow rate: 0.50 mL/min
- Column temperature: 35°C
- Calibration curve: A calibration curve was prepared using 12 types of PEO/PEG standard samples having different molecular weights.

Method for Measuring Difference in pH Values

A 19% polyvinyl alcohol-based resin composition (X) containing 12 parts by mass of glycerin per 100 parts by mass of a polyvinyl alcohol-based resin was prepared. A polyvinyl alcohol-based resin composition (X1) was then prepared by further diluting the polyvinyl alcohol-based resin composition (X) to 4% with ion-exchanged water. A polyvinyl alcohol-based resin composition (X2) was also prepared by maintaining the polyvinyl alcohol-based resin composition (X) at 90°C for one week and then diluting to 4% with ion-exchanged water.
The pH values of the compositions (X1) and (X2) were measured using a pH meter (Castani-ACT, D-21, available from Horiba, Ltd.) in accordance with JIS Z 8802, and the obtained pH values were defined as pH(X1) and pH(X2), respectively. The temperature of the liquid at this time was 25°C. The value obtained by subtracting the pH(X2) from the pH(X1) (that is, pH(X1) - pH(X2)) was defined as the difference in the pH values.
The above-described difference in pH values was measured three times, and the average value thereof is shown in Table 1 below as the difference in pH values.

Synthesis Example of Polyvinyl Alcohol-Based Resin (A1) (Bio-Derived PVA Resin)

To a reactor equipped with a reflux condenser, a sample inlet, and a stirring blade, 650 parts by mass of vinyl acetate produced using bioethylene as a raw material (that is, the carbon of the vinyl group moiety was bio-derived) and 131 parts by mass of methanol were added, and the reactor was immersed in a water bath to increase the temperature. When reflux from the condenser was observed (internal temperature of approximately 60°C), 0.052 parts by mass of 2,2'-azobis(isobutyronitrile) was added as an initiator. During the polymerization, the temperature of the water bath was appropriately adjusted so that reflux from the condenser was continued, the product was sampled to confirm, from the solid content concentration, the progression of polymerization, and when the conversion rate of the vinyl acetate reached 55%, 0.013 parts by mass of m-dinitrobenzene and 500 parts by mass of methanol were added as polymerization terminators, and the polymerization was terminated. It took 6.75 hours to reach the target conversion rate after the initiator was added.
The resulting solution after polymerization was distilled under reduced pressure to remove the methanol and vinyl acetate. As appropriate, when the viscosity increased, methanol was added to drive off the remaining vinyl acetate, and a methanol solution of polyvinyl acetate was thereby produced.

The methanol solution of polyvinyl acetate thus produced was diluted with methanol to a concentration of 4 mass%, and 2500 parts by mass of this polyvinyl acetate methanol solution (100 parts by mass as polyvinyl acetate) was placed in the same reactor as above. The reactor was then immersed in a water bath and heated so that the internal temperature was 65°C. Next, 26.7 parts by mass of a methanol solution of 3.5 mass% sodium hydroxide was added thereto to initiate a saponification reaction. As the saponification reaction proceeded, a saponified product was precipitated, but stirring was continued in that state. 1.5 hours after the addition of the methanol solution of sodium hydroxide, the resulting saponified product was filtered off and placed once again in the reactor, 700 parts by mass of methanol was added thereto, and the contents were heated to 65°C. To the resultant, 20 parts by mass of a methanol solution of 3.5 mass% sodium hydroxide was added, and the mixture was reacted for 2.5 hours to drive the saponification reaction. Subsequently, 1.3 parts by mass of acetic acid and 1200 parts by mass of methanol were added to neutralize the mixture, after which the mixture was suction filtered while being washed with methanol, and a saponified product was collected. To the resulting saponified product, 1800 parts by mass of methanol was added, and the mixture was washed at 65°C for 30 minutes and then filtered. The saponified product after washing was dried at 50°C for 12 hours in a vacuum dryer, and a polyvinyl alcohol-based resin (A1) (bio-derived PVA resin) (weight average molecular weight: 81000; pMC of C14: 94.8; saponification degree: 99.8 mol%) was produced.

Synthesis Example of Polyvinyl Alcohol-Based Resin (A'1) (Petroleum-Derived PVA Resin)

To a reactor equipped with a reflux condenser, a sample inlet, and a stirring blade, 650 parts by mass of petroleum-derived vinyl acetate and 131 parts by mass of methanol were added, and the reactor was immersed in a water bath to increase the temperature. When reflux from the condenser was observed (internal temperature of approximately 60°C), 0.052 parts by mass of 2,2'-azobis(isobutyronitrile) was added as an initiator. During the polymerization, the temperature of the water bath was appropriately adjusted so that reflux from the condenser was continued, the product was sampled to confirm, from the solid content concentration, the progression of polymerization, and when the conversion rate of the vinyl acetate reached 50%, 0.013 parts by mass of m-dinitrobenzene and 500 parts by mass of methanol were added as polymerization terminators, and the polymerization was terminated. It took 5 hours to reach the target conversion rate after the initiator was added.

The resulting solution after polymerization was distilled under reduced pressure to remove the methanol and vinyl acetate. As appropriate, when the viscosity increased, methanol was added to drive off the remaining vinyl acetate, and a methanol solution of polyvinyl acetate was thereby produced.

The methanol solution of polyvinyl acetate thus produced was diluted with methanol to a concentration of 6 mass%, and 2000 parts by mass of this polyvinyl acetate methanol solution (120 parts by mass as polyvinyl acetate) was charged into the same reactor as above. The reactor was immersed in a water bath and heated so that the internal temperature was 50°C. Next, 128 parts by mass of a methanol solution of 3.5 mass% sodium hydroxide was added thereto to initiate a saponification reaction. As the saponification reaction proceeded, a saponified product was precipitated, but stirring was continued in that state. 2.5 hours after the addition of the methanol solution of sodium hydroxide, the resulting saponified product was filtered off and placed once again in the reactor, 700 parts by mass of methanol was added thereto, and the contents were heated to 50°C. To the resultant, 96 parts by mass of a methanol solution of 3.5 mass% sodium hydroxide was added, and the mixture was reacted for 4 hours to drive the saponification reaction. Subsequently, 6.0 parts by mass of acetic acid was added to neutralize the mixture, after which the mixture was suction filtered while being washed with methanol, and a saponified product was collected. An operation of adding 1200 parts by mass of methanol to the resulting saponified product, washing the mixture at 50°C for 30 minutes, and then filtering was carried out twice. The saponified product after washing was dried at 50°C for 12 hours in a vacuum dryer, and a polyvinyl alcohol-based resin (A'1) (petroleum-derived PVA resin) (weight average molecular weight: 79400; pMC of C14: equal to or less than the detection limit (0.44); saponification degree: 99.8 mol%) was produced.

Example 1

The polyvinyl alcohol-based resin (A1) (bio-derived PVA resin) and the polyvinyl alcohol-based resin (A'1) (petroleum-derived PVA resin) produced in the synthesis examples above were mixed at a mass ratio of 10:90 to prepare a polyvinyl alcohol-based resin (A). Next, a composition was produced by blending 12 parts by mass of glycerin (available from Fujifilm Wako Pure Chemical Corporation, special grade reagent) as a plasticizer (B) into 100 parts by mass of the polyvinyl alcohol-based resin (A), after which ion-exchanged water was added to the composition such that the concentration of the composition became 19 mass%. The mixture was then dissolved at 130°C for 1 hour using an autoclave, and a polyvinyl alcohol-based resin composition aqueous solution (1) was produced.

The pH difference test was conducted using the resulting polyvinyl alcohol-based resin composition aqueous solution (1), and the result was 0.23.

A chrome-plated stainless steel plate placed on a hotplate heated to 90°C was coated with the aqueous solution of the polyvinyl alcohol-based resin composition using an applicator (clearance: 450 μm, coating width: 150 mm), and the applied aqueous solution was dried on the hotplate at 90°C for 2.5 minutes, after which the resulting film was removed. Subsequently, the film was heat-treated in a dryer at 120°C for 1 minute to produce a polyvinyl alcohol-based resin film (1-1) having a thickness of 45 μm (and a pMC of C14 of 16.4).

Example 2

A polyvinyl alcohol-based resin composition aqueous solution (2) and a polyvinyl alcohol-based resin film (2-1) (pMC of C14 of 30.5) were produced in the same manner as in Example 1 with the exception that the polyvinyl alcohol-based resin (A1) (bio-derived PVA resin) and the polyvinyl alcohol-based resin (A'1) (petroleum-derived PVA resin) produced in the synthesis examples were mixed at a mass ratio of 25:75.
Moreover, the pH difference test was conducted using the resulting polyvinyl alcohol-based resin composition aqueous solution (2), and the result was 0.23.

Example 3

A polyvinyl alcohol-based resin aqueous composition solution (3) and a polyvinyl alcohol-based resin film (3-1) (pMC of C14 of 43.5) were produced in the same manner as in Example 1 with the exception that the polyvinyl alcohol-based resin (A1) (bio-derived PVA resin) and the polyvinyl alcohol-based resin (A'1) (petroleum-derived PVA resin) produced in the synthesis examples were mixed at a mass ratio of 40:60.
Moreover, the pH difference test was conducted using the resulting polyvinyl alcohol-based resin composition aqueous solution (3), and the result was 0.12.

Comparative Example 1

A composition was produced by blending 12 parts by mass of glycerin (available from Fujifilm Wako Pure Chemical Corporation, special grade reagent) as a plasticizer (B) into 100 parts by mass of the polyvinyl alcohol-based resin (A'1) (petroleum-derived PVA resin) produced in the synthesis example above, after which ion-exchanged water was added to the composition such that the concentration of the composition became 19 mass%. The mixture was then dissolved at 130°C for 1 hour using an autoclave, and a polyvinyl alcohol-based resin composition aqueous solution (1') was produced.
A chrome plate placed on a hotplate heated to 90°C was coated with the aqueous solution of the polyvinyl alcohol-based resin composition using an applicator with a clearance of 450 μm, and the applied aqueous solution was dried on the hotplate at 90°C for 2.5 minutes, after which the resulting film was removed. Subsequently, the film was heat-treated in a dryer at 120°C for 1 minute to produce a polyvinyl alcohol-based resin film (1'-1) having a thickness of 45 μm (and a pMC of C14 of 8.1).
Moreover, the pH difference test was conducted using the resulting polyvinyl alcohol-based resin composition aqueous solution (1'), and the result was 0.43.

Comparative Example 2

A polyvinyl alcohol-based resin composition aqueous solution (2') and a polyvinyl alcohol-based resin film (2'-1) (pMC of C14 of 61.2) were produced in the same manner as in Example 1 with the exception that the polyvinyl alcohol-based resin (A1) (bio-derived PVA resin) and the polyvinyl alcohol-based resin (A'1) (petroleum-derived PVA resin) produced in the synthesis examples were mixed at a mass ratio of 60:40.
Moreover, the pH difference test was conducted using the resulting polyvinyl alcohol-based resin composition aqueous solution (2'), and the result was 0.31.

Comparative Example 3

A polyvinyl alcohol-based resin composition aqueous solution (3') and a polyvinyl alcohol-based resin film (3'-1) (pMC of C14 of 78.7) were produced in the same manner as in Example 1 with the exception that the polyvinyl alcohol-based resin (A1) (bio-derived PVA resin) and the polyvinyl alcohol-based resin (A'1) (petroleum-derived PVA resin) produced in the synthesis examples were mixed at a mass ratio of 80:20.
Moreover, the pH difference test was conducted using the resulting polyvinyl alcohol-based resin composition aqueous solution (3'), and the result was 0.31.

Comparative Example 4

A polyvinyl alcohol-based resin composition aqueous solution (4') and a polyvinyl alcohol-based resin film (4'-1) (pMC of C14 of 95.6) were produced in the same manner as in Example 1 with the exception that the polyvinyl alcohol-based resin (A1) (bio-derived PVA resin) produced in the synthesis example was used at an amount of 100 parts by mass.

Moreover, the pH difference test was conducted using the resulting polyvinyl alcohol-based resin composition aqueous solution (4'), and the result was 0.29.

Table 1

|  | Example 1 | Example 2 | Example 3 | Comparative Example 1 | Comparative Example 2 | Comparative Example 3 | Comparative Example 4 |
|---|---|---|---|---|---|---|---|
| Polyvinyl alcohol-based resin (A1) (bio-derived PVA resin) (parts by mass) | 10 | 25 | 40 | 0 | 60 | 80 | 100 |
| Polyvinyl alcohol-based resin (A'1) (petroleum-derived PVA resin) (parts by mass) | 90 | 75 | 60 | 100 | 40 | 20 | 0 |
| Plasticizer (B) (parts by mass) | 12 | 12 | 12 | 12 | 12 | 12 | 12 |
| pMC of C14 | 16.4 | 30.5 | 43.5 | 8.1 | 61.2 | 78.7 | 95.6 |
| pH value difference | 0.23 | 0.23 | 0.12 | 0.43 | 0.31 | 0.31 | 0.29 |

For the polyvinyl alcohol-based resin films of Examples 1 to 3, the pMC values of C14 as measured by the ASTM D6866 (Method B) standard were within the range specified in the present disclosure, and polyvinyl alcohol-based resin films in which a decrease in the pH value was suppressed were produced.

In contrast, it was found that for the polyvinyl alcohol-based resin films of Comparative Examples 1 to 4, the pMC values of C14 as measured by the ASTM D6866 (Method B) standard were outside the range specified in the present disclosure, and therefore these polyvinyl alcohol-based resin films were films in which the decrease in the pH value became significant.

Specific embodiments of the present disclosure were described in the above examples, but the above examples are merely illustrative and are not to be construed as limiting. Various modifications apparent to those skilled in the art are intended to be within the scope of the present disclosure.

Industrial Applicability

The polyvinyl alcohol-based resin film of the present disclosure is a polyvinyl alcohol-based resin composition and a polyvinyl alcohol-based resin film that can suppress corrosive deterioration of a dissolution can, an extruder, a die mold, a metal roll, a belt, and the like used in manufacturing and are excellent in production efficiency and maintenance ease, and thus the polyvinyl alcohol-based resin film is preferably used, for example, in polarizing film applications (such as liquid crystal televisions, smartphones, tablets, personal computers, projectors, and in-vehicle panels) and in water-soluble film applications (such as unit packaging applications of chemicals such as agricultural chemicals and detergents, (water pressure) transfer films, sanitary products such as napkins and disposable diapers, waste disposal products such as ostomy bags, medical products such as blood-absorbing sheets, and temporary substrates such as seedling sheets, seed tapes, and embroidery base fabrics).

**Claims**

1.  A polyvinyl alcohol-based resin film comprising a polyvinyl alcohol-based resin (A),
    wherein
    the polyvinyl alcohol-based resin film has a percent modern carbon (pMC) value of C14 of from 9 to 50 as measured by the ASTM D6866 (Method B) standard.

2.  The polyvinyl alcohol-based resin film according to claim 1, wherein the polyvinyl alcohol-based resin (A) has a saponification degree of from 80 to 99.9 mol%.

3.  The polyvinyl alcohol-based resin film according to claim 1 or 2, wherein the polyvinyl alcohol-based resin (A) has a weight average molecular weight of from 20000 to 150000.

4.  The polyvinyl alcohol-based resin film according to any one of claims 1 to 3, comprising a plasticizer (B).

5.  The polyvinyl alcohol-based resin film according to claim 4,
    wherein a content of the plasticizer (B) is from 1 to 45 parts by mass per 100 parts by mass of the polyvinyl alcohol-based resin (A).

6.  The polyvinyl alcohol-based resin film according to any one of claims 1 to 5, wherein the polyvinyl alcohol-based resin film has a thickness of from 10 to 130 $\mu$m.

7.  The polyvinyl alcohol-based resin film according to any one of claims 1 to 6, wherein the polyvinyl alcohol-based resin film is configured for manufacturing a polarizing film.

8.  An optical film comprising the polyvinyl alcohol-based resin film according to any one of claims 1 to 7.

9.  The optical film according to claim 8, wherein the optical film is a polarizing film.

10. A water-soluble film comprising the polyvinyl alcohol-based resin film according to any one of claims 1 to 6.

11. A polyvinyl alcohol-based resin composition comprising at least a polyvinyl alcohol-based resin (A),
    wherein
    the polyvinyl alcohol-based resin composition has a pMC value of C14 of from 9 to 50 as measured by the ASTM D6866 (Method B) standard.

12. The polyvinyl alcohol-based resin composition according to claim 11, comprising a plasticizer (B).

13. A polyvinyl alcohol-based resin film comprising the polyvinyl alcohol-based resin composition according to claim 11 or 12.

## INTERNATIONAL SEARCH REPORT

| International application No. |
|---|
| **PCT/JP2024/006964** |

| **A. CLASSIFICATION OF SUBJECT MATTER** |
|---|
| ***C08J 5/18***(2006.01)i; ***C08F 8/12***(2006.01)i; ***C08F 16/06***(2006.01)i; ***C08L 29/04***(2006.01)i; ***G02B 5/30***(2006.01)i<br>FI: C08J5/18 CEX; C08F8/12; C08F16/06; C08L29/04; G02B5/30 |
| According to International Patent Classification (IPC) or to both national classification and IPC |

| **B. FIELDS SEARCHED** |
|---|
| Minimum documentation searched (classification system followed by classification symbols)<br>C08J5/00-5/02; C08J5/12-5/22; C08C19/00-19/44; C08F6/00-246/00; C08F301/00; C08K3/00-13/08; C08L1/00-101/14; G02B5/30 |
| Documentation searched other than minimum documentation to the extent that such documents are included in the fields searched<br>Published examined utility model applications of Japan 1922-1996<br>Published unexamined utility model applications of Japan 1971-2024<br>Registered utility model specifications of Japan 1996-2024<br>Published registered utility model applications of Japan 1994-2024 |
| Electronic data base consulted during the international search (name of data base and, where practicable, search terms used) |

| **C. DOCUMENTS CONSIDERED TO BE RELEVANT** | | |
|---|---|---|
| Category* | Citation of document, with indication, where appropriate, of the relevant passages | Relevant to claim No. |
| X | JP 7072129 B1 (KURARAY CO., LTD.) 19 May 2022 (2022-05-19)<br>claims 1, 4, 6-7, 10-11, paragraphs [0030]-[0031], [0040]-[0042], [0047]-[0049], examples | 1-13 |
| X | JP 2022-032037 A (KURARAY CO., LTD.) 24 February 2022 (2022-02-24)<br>claims 1, 6, paragraphs [0030], [0048], [0079], [0093], examples | 1-2, 4-6, 11-13 |
| A | JP 2021-518873 A (BRASKEM S.A.) 05 August 2021 (2021-08-05)<br>entire text, all drawings | 1-13 |
| A | US 2011/0287204 A1 (ARKEMA FRANCE) 24 November 2011 (2011-11-24)<br>entire text, all drawings | 1-13 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 April 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/006964**

| Patent document cited in search report | | | Publication date (day/month/year) | Patent family member(s) | | | Publication date (day/month/year) |
|---|---|---|---|---|---|---|---|
| JP | 7072129 | B1 | 19 May 2022 | US 2022/0348757 A1 claims 1, 4, paragraphs [0033]-[0034], [0044]-[0045], [0050]-[0052], examples WO 2022/080472 A1 EP 4071080 A1 KR 10-2022-0100871 A CN 114901734 A | | | |
| JP | 2022-032037 | A | 24 February 2022 | US 2023/0250269 A1 claims 3, 34, paragraphs [0084], [0115], examples WO 2022/004701 A1 EP 4173823 A1 TW 202206469 A CN 115715308 A KR 10-2023-0030654 A | | | |
| JP | 2021-518873 | A | 05 August 2021 | US 2019/0315948 A1 entire text, all drawings WO 2019/202405 A1 EP 3619259 A1 CN 112204090 A KR 10-2021-0005886 A | | | |
| US | 2011/0287204 | A1 | 24 November 2011 | WO 2010/055257 A1 entire text, all drawings EP 2346911 A1 | | | |

Form PCT/ISA/210 (patent family annex) (July 2022)

**REFERENCES CITED IN THE DESCRIPTION**

**Patent documents cited in the description**

- JP H0128396 A
- JP 2012021174 A
- JP 2014046672 A
- JP 2014148754 A